Europäisches Patentamt

European Patent Office

Office européen des brevets

(11) Publication number: **0 200 324**
**A2**

# (12) EUROPEAN PATENT APPLICATION

(21) Application number: **86302007.9**

(22) Date of filing: **19.03.86**

(51) Int. Cl.⁴: **G 01 L 1/22**

(30) Priority: **20.03.85 GB 8507261**

(43) Date of publication of application:
**05.11.86 Bulletin 86/45**

(84) Designated Contracting States:
**DE NL**

(71) Applicant: **W & T Avery Limited**
**Smethwick**
**Warley West Midland B66 2LP(GB)**

(72) Inventor: **Ford, Michael William**
**5 Westwood Road**
**Sutton Coldfield West Midlands B73 6UW(GB)**

(74) Representative: **Kirby, Harold Victor Albert**
**Central Patent Department Wembley Office The General**
**Electric Company, p.l.c. Hirst Research Centre East Lane**
**Wembley Middlesex HA9 7PP(GB)**

(54) Strain-ganged load cells.

(57) A load cell comprising a plurality of strain gauges (11) disposed around a circular opening (8) in a housing (1). The assembly of strain gauges so formed is enclosed by a resilient sealing member (12) in the form of a hollow annulus of moisture impervious material which affords protection against humidity without degrading performance of the load cell.

Fig.1.

EP 0 200 324 A2

Croydon Printing Company Ltd.

-1-

WT/2659 <span>EPC</span>

## Load Cells

This invention relates to load cells of the kind incorporating a plurality of strain gauges disposed in a generally circular configuration within an opening in a support and connected in such a manner that deformation of the strain gauge assembly produces a change in a measurable property of the assembly, thereby giving an indication of the applied load. Commonly four such strain gauges are employed in such a load cell and are connected to form a Wheatstone bridge.

Strain gauges in current general use will not work reliably if they are subject to humidity. Accordingly strain gauges on load cells are commonly protected by a moisture resistant coating. However on lower capacities this coating can adversely affect the weighing performance, due to the coating reinforcing the strained member. Thus the coating behaves less like an ideal spring (i.e one having a constant linear stress strain curve independent of temperature) than does the strain gauge material, with the consequence that the performance of a coated element is inferior to that of an element alone.

According to the invention, in a load cell of the kind referred to, the strain gauge assembly is enclosed within a sealing member in the form of a hollow annulus of moisture impervious resilient material having a circumferentially extending slot in its outer wall, the parts of the wall at the sides of the slot bearing resiliently against co-operating surfaces on opposite sides of the support so as to form moisture proof seals.

Such an arrangement has the advantage that, as the load cell is completely enclosed by the sealing member, which is conveniently formed of butyl rubber, a highly repeatable system is formed, so that it is a simple matter to provide compensation for creep changes and temperature effects after fitting the member. Other advantages will become apparent from the following description.

Preferably the edge of the opening carries cylindrical flanges and over which the parts of the wall of the sealing member at the sides of the slot are fitted, the dimensions of the member being such that it is held in tension.

Preferably also the edges of the slot are formed with thickened beads which bear against respective planar surfaces of the support.

A sealing compound may be provided between the co-operating surfaces of the sealing member and the support as an additional safeguard against moisture penetration.

One embodiment of the invention will now be described by way of example with reference to Figures 1 to 6 of the accompanying drawings, in which

Figure 1 represents a side view of a load cell having a sealing member in accordance with the inventions,

Figures 2 and 3 represent sections along A-A and B-B respectively,

Figure 4 represents a part of the sectional view of Figure 2 on an enlarged scale, and

Figures 5 and 6 represent a side view and a sectional view of the sealing member.

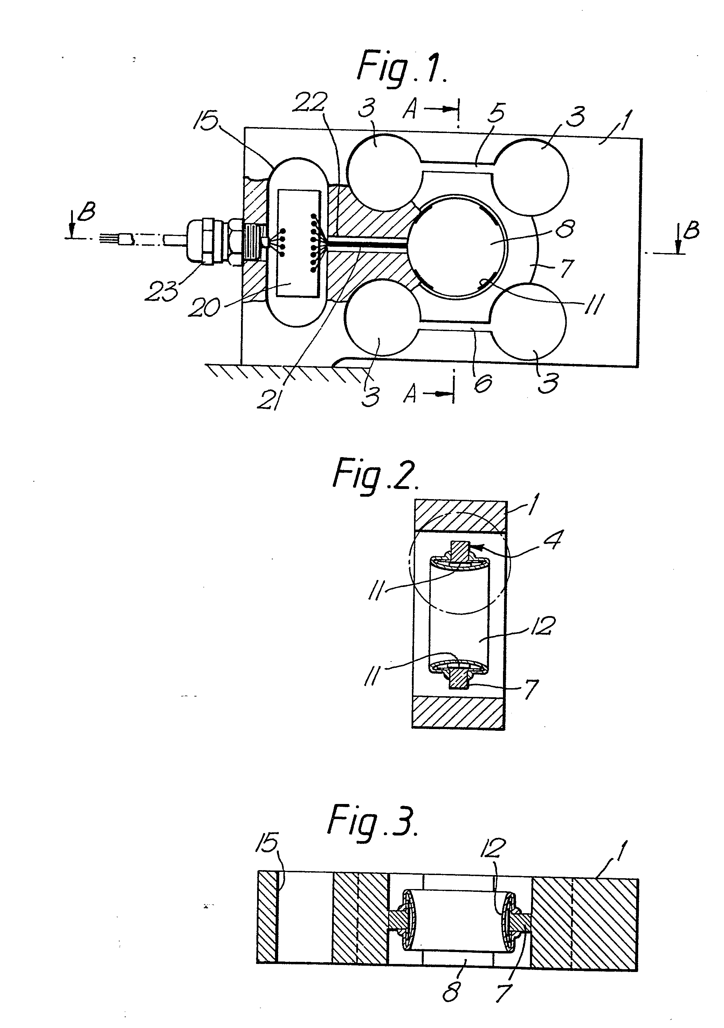

The load cell comprises an approximately rectangular housing 1 arranged to be fixed to a supporting structure 2 at one end as shown in Figure 1 as to extend cantilever fashion from the support, and is designed to give an indication of a load applied to its free end as at L.

The housing has four circular holes 3 extending transversely through it, around a central portion 4, the two upper holes being joined by a horizontally extending slot 5, and the two lower holes being connected by a similar slot 6.

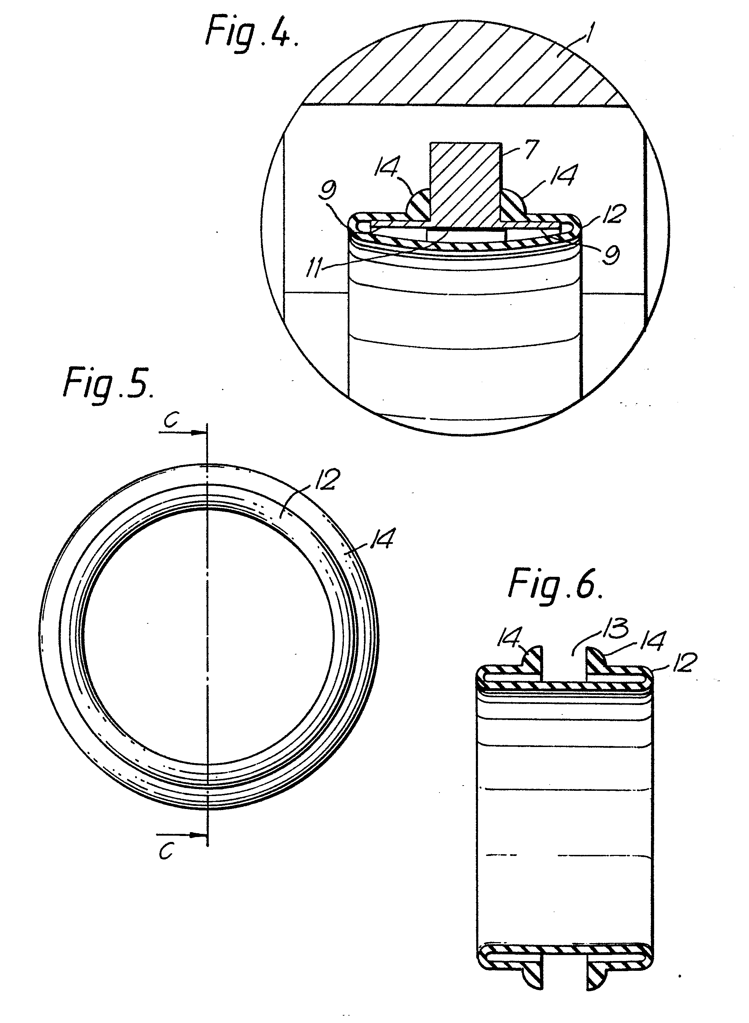

The central portion of the housing 1 is formed as a web 7 of relatively smaller thickness than the main part of the housing, and having a circular opening 8 formed within it, cylindrical flanges 9 extending from opposite sides of the inner edge of the opening, as shown more clearly in Figure 3.

Four strain gauges 11 which are totally conventional are disposed uniformly around the inner surface of the opening 8 and are connected in known manner in the form of a Wheatstone Bridge. The strain gauges 11 are of the type in which a resistive fibre is adhered to a backing, the resistance of the film varying as the gauge is deformed. The gauges 11 are connected to a Printed Circuit Board 20 via wires 21 extending through a connecting hole 22 in the housing 1 to an opening 15 in which the printed circuit board 20 is mounted. The printed circuit board 20 carries compensation components which can compensate for temperature effects under zero laod and other load conditions. Such components are well known and the printed circuit board and its components and connecting wires can be sealed in the opening 15 by conventional potting techniques as they do not provide any constraints on flexibility. The connections from outside equipment to the printed circuit board are made via a cable gland 23. The whole strain gauge assembly is enclosed, in accordance with the invention, by a seal member 12 in the form of a hollow annular boot of butyl rubber. In Figure 1 the boot is shown in dotted lines. The boot 12 has a circumferential opening 13 in its outer wall, the edges of which carry thickened beads 14, and in use the boot is fitted around the strain gauge assembly with the beads 14 bearing resiliently against the sides of the web 7 radially outside of the flanges 9.

The dimensions of the boot 12 are also such that the boot is under tension when fitted causing the two parts of the wall at the sides of the opening 13 to bear firmly against the flanges 9. By this means a moistureproof seal is formed, although, if desired, a sealing compound can be applied between contacting surfaces of the boot and the web 7. The tensile force in the rubber of the boot 12 causes the area under the seal to be subjected to a compressure force, and any sealant that is used in the area is thus rendered more effective as any voids in it tend to be closed.

As the strain gauges of the load cell are completely enclosed by the boot 12 a highly repeatable system is formed so that compensation for creep changes and temperature effects are possible. Moreover, as the boot covers only the strain sensing area of the load cell, compensation for temperature effects under zero load and various load conditions can be measured and compensated for after fitting the boot.

The load cell also has the advantage that it can be adusted to be insensitive to eccentric loads after sealing.

## CLAIMS

1. A load cell incorporating a plurality of strain gauges (11) disposed in a generally circular opening (8) within a housing (1) and connected in such a manner that deformation of the strain gauge assembly produces a change in a measurable property of the assembly, thereby giving an indication of an applied load, and characterised in that the strain gauge assembly is enclosed within a sealing member (12) in the form of a hollow annulus of moisture impervious resilient material having a circumferentially extending slot (13) in its outer wall, the parts of the wall at the sides of the slot bearing resiliently against cooperating surfaces on opposite sides of the support so as to form moisture proof seals.

2. A load cell as claimed in Claim 1, and characterised in that the sealing member (12) is of butyl rubber.

3. A load cell as claimed in Claim 1 or Claim 2, and characterised in that the edges of the opening (8) have cylindrical flanges (9) over which those parts of the wall of the sealing member which lie on either side of the slot are fitted.

4. A load cell as claimed in Claim 3, and characterised in that the sealing member (8) is so dimensioned that it is under tension when mounted in the support.

5. A load cell as claimed in any one of the preceding claims, and characterised in that the edges of the slot (13) are formed with thickened beads (14) which bear against respective planar surfaces (7) of the housing (1).

6. A load cell as claimed in any one of the preceding claims, and characterised in that a sealing compound is provided between the cooperating surfaces of the sealing member (12) and the housing (1).

**Fig.1.**

**Fig.2.**

**Fig.3.**

**Fig.4.**

**Fig.5.**

**Fig.6.**